# FASCICULE DE BREVET EUROPEEN

(11) **EP 2 125 316 B1**
(45) Date de publication et mention de la délivrance du brevet: **06.11.2013**
(21) Numéro de dépôt: 08761848.4
(22) Date de dépôt: 07.02.2008
(51) Int. Cl.: B29B 13/02, B29B 13/08, B29C 49/68, B29C 51/42

(54) **PERFECTIONNEMENTS A LA CHAUFFE DES MATIERES PLASTIQUES PAR RAYONNEMENT INFRAROUGE**
VERBESSERUNG AN DER ERHITZUNG VON KUNSTSTOFFMATERIALIEN DURCH INFRAROT-BESTRAHLUNG
IMPROVEMENT IN THE HEATING OF PLASTIC MATERIALS BY INFRARED RADIATION

(30) Priorité: 02.03.2007 FR 0701533
(43) Date de publication de la demande: 02.12.2009
(73) Titulaire: Sidel Participations, 76930 Octeville Sur Mer (FR)
(72) Inventeur: PLANTAMURA, Bernard, F- 76930 Octeville Sur Mer (FR)
(74) Mandataire: Louiset, Raphael
(86) Numéro de dépôt international: PCT/FR2008/000145
(87) Numéro de publication internationale: WO 2008/113908

(56) Documents cités:
- WO-A-2006/056673
- WO-A-2006/069261
- US-A- 5 780 524

## Description

L'invention a trait à la chauffe des matières plastiques, et plus particulièrement des matières thermoplastiques.

La chauffe des matières thermoplastiques est employée dans de nombreux domaines. Une utilisation prépondérante dans l'industrie est le moulage de pièces. Il existe cependant plusieurs techniques de moulage, qui nécessitent des types de chauffe différents.

Dans certaines techniques de moulage, les matières thermoplastiques sont chauffées à une température supérieure à leur température de fusion pour être fluidifiées et mise en forme à partir de leur forme fluide. Citons à titre d'exemples l'extrusion, l'injection ou encore le moulage par rotation (rotomoulage).

Dans d'autres techniques, les matières thermoplastiques sont chauffées à une température supérieure à leur température de transition vitreuse, mais inférieure à leur température de fusion, de sorte à rendre le matériau ductile et permettre sa mise en forme. Citons à titre d'exemple le thermoformage ou encore le soufflage, ou plus précisément l'injection soufflage ou l'injection soufflage avec bi-orientation. Dans ces techniques, la chauffe de la matière est plus délicate que dans les autres techniques évoquées ci-dessus, car il est indispensable de contrôler la chauffe de manière précise. Celle-ci se fait généralement par rayonnement dans un four, les objets chauffés n'étant pas en contact avec les éléments chauffants.

Dans un cadre industriel, il va de soi que le temps de chauffe est un paramètre important car les cadences imposées par la production sont généralement très élevées. C'est pourquoi Il apparaît souhaitable de diminuer autant que possible le temps de chauffe, sans pour autant négliger les autres paramètres, notamment l'homogénéité de la chauffe, la pénétration du rayonnement au coeur de la matière et le rendement énergétique.

Il est connu que dans l'ensemble du spectre seul le rayonnement infrarouge est véritablement utile pour la chauffe.

Dans l'industrie, et plus particulièrement dans la fabrication des récipients à partir d'ébauches (préformes ou récipients intermédiaires) en matière thermoplastique, on utilise des fours équipés de lampes halogènes qui, si elles présentent l'avantage d'être puissantes, ont toutefois l'inconvénient de rayonner sur l'ensemble du spectre, de sorte qu'une partie de la puissance consommée est rayonnée en pure perte, le rendement global des fours étant de ce fait relativement faible.

Afin d'améliorer le rendement des fours tout en cherchant à réduire le temps de chauffe, la demanderesse a récemment proposé, dans la demande internationale WO 2006/056673, d'utiliser un faisceau électromagnétique cohérent et plus particulièrement monochromatique, notamment un laser qui peut être émis à partir d'une diode laser, pour réaliser la chauffe de préformes.

Cette technique est prometteuse et mérite d'être perfectionnée, les inventeurs ayant constaté que la chauffe ainsi réalisée ne permet pas d'obtenir des performances constantes selon le matériau choisi.

Un objet de l'invention est donc de proposer une solution permettant d'améliorer la versatilité de la chauffe, de sorte que, pour une gamme de matériaux différents, un compromis puisse être réalisé entre le temps de chauffe l'homogénéité de la chauffe et le rendement énergétique.

A cet effet, l'invention propose un procédé selon la revendication 1 pour chauffer une matière plastique au moyen d'au moins une source de rayonnement électromagnétique dont le rayonnement est émis dans l'infrarouge à une longueur d'onde ou dans un spectre de longueurs d'onde compris dans l'une des gammes suivantes
■ 1110 - 1160 nm ;
■ 1390 - 1450 nm ;
■ 1610 - 1650 nm ;
■ 1675 - 1700 nm ;
■ 1880 - 2100 nm ;
■ 2170 - 2230 nm,
et de préférence dans l'une des gammes suivantes :
■ 1110 - 1150 nm ;
■ 1400 - 1430 nm ;
■ 1627 - 1647 nm ;
■ 1680 - 1695 nm ;
■ 1890 - 1906 nm ;
■ 1920 - 1950 nm ;
■ 2074 - 2094 nm ;
■ 2188 - 2216 nm.

Suivant des modes de réalisation préférés, la valeur de la longueur d'onde du rayonnement infrarouge peut être sensiblement égale à l'une des valeurs suivantes :
■ 1130 nm,
■ 1414 nm,
■ 1637 nm,
■ 1688 nm,
■ 1898 nm,
■ 1935 nm,
■ 2084 nm,
■ 2205 nm.

En outre, suivant un mode particulier de réalisation, plusieurs rayonnements peuvent être émis à des longueurs d'ondes distinctes ou sur des spectres distincts, compris chacun dans l'une des gammes ci-dessus ou ayant l'une des valeurs listées ci-dessus.

Le rayonnement électromagnétique est, de préférence, monochromatique ou quasi-monochromatique. Quant à la source de rayonnement électromagnétique, il s'agit par exemple d'un laser.

Ce procédé peut être notamment appliqué :
■ à la chauffe des ébauches pour la fabrication de récipients à partir desdites ébauches, ou encore
■ à la chauffe de feuilles ou de plaques pour la fabrication d'objets par thermoformage.

D'autres objets et avantages de l'invention apparaîtront à la lumière de la description qui suit de modes de réalisations.

Le procédé proposé vise à chauffer un objet intermédiaire réalisé dans une matière thermoplastique en vue de sa déformation ultérieure pour l'obtention d'un article fini. L'objet intermédiaire peut être une plaque mince destinée à être thermoformée, notamment pour l'obtention d'un objet tel qu'un récipient à col large (par exemple une boîte), ou encore une préforme destinée à être soufflée ou étirée soufflée pour l'obtention d'un récipient à col étroit (tel qu'une bouteille).

Parmi les matériaux envisagés, citons notamment le polyéthylène téréphtalate (PET), le polypropylène (PP) et l'acide polylactique (PLA), dont les principales caractéristiques thermiques sont rappelées dans le tableau 1 ci-dessous. Il est à noter que ces matériaux sont très utilisés dans la fabrication des récipients.

| | PET | PP | PLA |
|---|---|---|---|
| Température de fusion (°C) | 250 à 270 | 162 à 168 | 173 à 178 |
| Température de transition vitreuse (°C) | 75 à 80 | -10 à +10 | 50 à 80 |

Les inventeurs sont partis du constat qu'à spectre rayonné constant et puissance constante, la chauffe ne produit généralement pas les mêmes résultats selon les matériaux choisis, les vitesses de chauffe variant d'un matériau à l'autre. En particulier, des différences importantes ont été constatées entre le PET d'une part et le PP d'autre part.

Des essais ont été conduits sur plusieurs matériaux afin de sélectionner dans l'ensemble du spectre des longueurs d'onde qui puissent convenir à une chauffe réalisée de manière industrielle sur l'ensemble de ces matériaux en conservant une même source de rayonnement électromagnétique.

Les conditions des essais sont les suivantes.

Les échantillons étudiés sont des plaques minces d'une épaisseur de 3 mm réalisées dans les matériaux suivants :
■ PET EASTMAN 9921,
■ PET DAK Laser+,
■ PLA NATUREWORKS 7000D,
■ PP NOVOLEN 3348,
■ Mélange PET/Nylon 2%.

Les échantillons sont soumis de manière unilatérale (c'est-à-dire sur l'une des faces, dite face incidente) à un rayonnement infrarouge incident dont la puissance est de 2 W/cm², pour une sélection de longueurs d'onde comprises entre 800 nm et 2500 nm.

On a mesuré pour chaque échantillon, et à chaque longueur d'onde sélectionnée :
- le rendement p d'absorption du rayonnement, c'est-à-dire le rapport de la puissance absorbée par l'échantillon à la puissance incidente,
- la vitesse V1 de chauffe du matériau sur la face incidente (soit jusqu'à une profondeur de 100 µm environ),
- la vitesse V2 de chauffe du matériau sur la face opposée (soit, également jusqu'à une profondeur de 100 µm environ).

Les mesures sont rassemblées, pour chaque échantillon, dans les tableaux 2.1 à 2.5 ci-dessous.

**Tableau 2.1 - PET Eastman 9921**

| **λ** | **ρ (%)** | **V1 (°C/s)** | **V2 (°C/s)** |
|---|---|---|---|
| 880* | 2 | 0,1 | 0,1 |
| 1130 | 17 | 0,7 | 0,6 |
| 1414 | 23 | 1 | 0,8 |
| 1637 | 39 | 1,9 | 1,2 |
| 1662* | 89 | 9,4 | 0,7 |
| 1688 | 62 | 3,8 | 1,4 |
| 1736* | 55 | 3,2 | 1,4 |
| 1898 | 58 | 3,5 | 1,4 |
| 1935 | 46 | 2,4 | 1,3 |
| 2084 | 59 | 3,5 | 1,4 |
| 2136* | 89 | 9,2 | 0,7 |
| 2205 | 69 | 4,7 | 1,4 |

**Tableau 2.2 - PET DAK Laser+**

| **λ** | **ρ (%)** | **V1 (°C/s)** | **V2 (°C/s)** |
|---|---|---|---|
| 880* | 9 | 0,4 | 0,3 |
| 1130 | 23 | 1 | 0,8 |
| 1414 | 29 | 1,4 | 1 |
| 1637 | 45 | 2,4 | 1,3 |
| 1662* | 90 | 9,7 | 0,7 |
| 1688 | 66 | 4,2 | 1,4 |
| 1736* | 59 | 3,5 | 1,4 |
| 1898 | 62 | 3,9 | 1,4 |
| 1935 | 51 | 2,9 | 1,4 |
| 2084 | 64 | 4 | 1,4 |
| 2136* | 90 | 9,7 | 0,7 |
| 2205 | 73 | 5,2 | 1,3 |

**Tableau 2.3 - PLA 7000D**

| **λ** | **ρ (%)** | **V1 (°C/s)** | **V2 (°C/s)** |
|---|---|---|---|
| 880* | 8 | 0,3 | 0,3 |
| 1130 | 10 | 0,4 | 0,4 |
| 1414 | 24 | 1,1 | 0,8 |
| 1637 | 14 | 0,6 | 0,5 |
| 1662* | 47 | 2,5 | 1,3 |
| 1688 | 67 | 4,4 | 1,4 |
| 1736* | 68 | 4,5 | 1,4 |
| 1898 | 63 | 4 | 1,4 |
| 1935 | 44 | 2,3 | 1,3 |
| 2084 | 53 | 2,9 | 1,4 |
| 2136* | 66 | 4,2 | 1,4 |
| 2205 | 65 | 4,1 | 1,4 |

**Tableau 2.4 - PP NOVOLEN 3348**

| **λ** | **ρ (%)** | **V1 (°C/s)** | **V2 (°C/s)** |
|---|---|---|---|
| 880* | 46 | 2,5 | 1,2 |
| 1130 | 38 | 1,9 | 1,1 |
| 1414 | 50 | 2,8 | 1,3 |
| 1637 | 37 | 1,8 | 1,1 |
| 1662* | 38 | 1,9 | 1,1 |
| 1688 | 67 | 4,4 | 1,4 |
| 1736* | 90 | 9,7 | 0,7 |
| 1898 | 62 | 3,8 | 1,4 |
| 1935 | 60 | 3,6 | 1,4 |
| 2084 | 54 | 3 | 1,4 |
| 2136* | 53 | 3 | 1,4 |
| 2205 | 66 | 4,2 | 1,4 |

**Tableau 2.5 - PET Nylon 2%**

| **λ** | **ρ (%)** | **V1 (°C/s)** | **V2 (°C/s)** |
|---|---|---|---|
| 880* | 21 | 0,9 | 0,7 |
| 1130 | 31 | 1,4 | 1 |
| 1414 | 33 | 1,6 | 1,1 |
| 1637 | 46 | 2,4 | 1,3 |
| 1662* | 86 | 7,9 | 1 |
| 1688 | 66 | 4,2 | 1,4 |
| 1736* | 61 | 3,7 | 1,4 |
| 1898 | 59 | 3,5 | 1,4 |
| 1935 | 52 | 2,9 | 1,4 |
| 2084 | 65 | 4,1 | 1,4 |
| 2136* | 85 | 7,5 | 1 |
| 2205 | 74 | 5,2 | 1,4 |

Il a été remarqué que, pour un certain nombre de longueurs d'onde, un bon compromis est réalisé entre le rendement (suffisamment élevé) et le gradient thermique V1/V2 (suffisamment faible), ce qui témoigne d'une chauffe relativement homogène et versatile.

A contrario, pour d'autres longueurs d'onde, marquées d'une astérisque dans les tableaux ci-dessus, on remarque que pour au moins l'un des matériaux choisis ce compromis n'est pas réalisé.

À 880 nm par exemple, le rendement est trop faible pour le PET EASTMAN 9921.

À 1662 nm, le gradient thermique est trop élevé pour le PET DAK Laser+ et pour le PET Nylon.

À 1736 nm, le gradient thermique est trop élevé pour le PP NOVOLEN 3348.

À 2136 nm, le gradient thermique est trop élevé pour tous les PET, y compris pour le PET Nylon.

Cette analyse conduit à sélectionner, pour le rayonnement électromagnétique de la source employée pour la chauffe des matières thermoplastiques, les longueurs d'onde suivantes (en nm) : 1130, 1414, 1637, 1688, 1898, 1935, 2084 et 2205.

Il est envisageable de combiner ces longueurs d'onde, par exemple en juxtaposant plusieurs sources ayant des valeurs distinctes choisies chacune parmi les longueurs d'onde listées ci-dessus.

En pratique, le, rayonnement électromagnétique émis par les sources de rayonnement infrarouge du commerce n'est pas concentré sur une longueur d'onde unique, mais s'étend sur un spectre plus ou moins large (de quelques nm à plusieurs dizaines de nm).

Aussi, bien qu'il soit possible par divers montages (tel que l'interposition d'un filtre interférentiel devant une lampe halogène) de restreindre le spectre du rayonnement émis pour obtenir un rayonnement à longueur d'onde unique (monochromatique) ou avec une tolérance de quelques nanomètres (quasi-monochromatique), il est plus raisonnable de choisir une source moins coûteuse (telle qu'une diode laser de puissance) dont le spectre émis couvrira la longueur d'onde sélectionnée, sans pour autant s'étendre jusqu'à une (ou plusieurs) longueur(s) d'onde indésirable(s).

On fournit ci-après, en regard des longueurs d'onde sélectionnées, des tolérances admissibles, c'est-à-dire des gammes de longueurs d'onde au sein desquelles peuvent se situer la longueur d'onde ou le spectre émis par la source choisie.

Le tableau 3.1 fournit une première série de tolérances relativement restreintes. Le tableau 3.2 fournit une seconde série de tolérances plus larges. Il est considéré qu'en dehors de ces tolérances, le rayonnement émis ne permet pas d'atteindre les objectifs formulés ci-dessus.

**Tableau 3.1**

| **Longueurs d'onde (nm)** | **Tolérances (nm)** |
|---|---|
| 1130 | 1110 - 1150 |
| 1414 | 1400 - 1430 |
| 1637 | 1627 - 1647 |
| 1688 | 1680 - 1695 |
| 1898 | 1890 - 1906 |
| 1935 | 1920 - 1950 |
| 2084 | 2074 - 2094 |
| 2205 | 2188 - 2216 |

**Tableau 3.2**

| **Longueurs d'onde (nm)** | **Tolérances (nm)** |
|---|---|
| 1130 | 1110 - 1160 |
| 1414 | 1390 - 1450 |
| 1637 | 1610 - 1650 |
| 1688 | 1615 - 1700 |
| 1898, 1935, 2084 | 1880 - 2100 |
| 2205 | 2170 - 2230 |

Comme cela est indiqué ci-dessus, il peut être avantageux de combiner plusieurs longueurs d'onde ou plusieurs spectres, par exemple en juxtaposant plusieurs sources émettant chacune (de manière monochromatique, quasi-monochromatique ou sur un spectre) dans l'une des gammes sélectionnées.

Comme cela est suggéré plus haut, le procédé de chauffe de matière thermoplastique consistant à irradier la matière au moyen d'un rayonnement électromagnétique émis dans l'infrarouge dans l'une des longueurs d'onde sélectionnées, ou dans un spectre compris dans l'une des gammes sélectionnées, peut être appliqué avec succès à la chauffe des ébauches (qu'il s'agisse de préforme ou même de récipients intermédiaires) pour la fabrication des récipients.

Ce procédé peut aussi être appliqué à la chauffe de plaques ou feuilles pour la fabrication d'objets par thermoformage.

## Revendications

1. Procédé pour chauffer une matière plastique du type polyéthylène téréphtalate (PET), polypropylène (PP), acide polylactique (PLA) ou mélangé PET/nylon 2%, au moyen d'au moins une source de rayonnement électromagnétique, **caractérisé en ce que** le rayonnement électromagnétique est émis dans l'infrarouge à une longueur d'onde ou dans un spectre de longueurs d'onde compris dans l'une des gammes suivantes :
■ 1110- 1160 nm ;
■ 1390 - 1450 nm ;
■ 1610 - 1650 nm ;
■ 1675 - 1700 nm ;
■ 1880 - 2100 nm ;
■ 2170 - 2230 nm.

2. Procédé selon la revendication 1, dans laquelle la longueur d'onde ou le spectre du rayonnement infrarouge est compris dans l'une des gammes suivantes :
■ 1110 - 1150 nm ;
■ 1400 - 1430 nm ;
■ 1627 - 1647 nm ;
■ 1680 - 1695 nm ;
■ 1890 - 1906 nm ;
■ 1920 - 1950 nm ;
■ 2074 - 2094 nm ;
■ 2188 - 2216 nm.

3. Procédé selon la revendication 1 ou 2, dans lequel la longueur d'onde du rayonnement infrarouge est de 1130 nm environ.

4. Procédé selon la revendication 1 ou 2, dans lequel la longueur d'onde du rayonnement infrarouge est de 1414 nm environ.

5. Procédé selon la revendication 1 ou 2, dans lequel la longueur d'onde du rayonnement infrarouge est de 1637 nm environ.

6. Procédé selon la revendication 1 ou 2, dans lequel la longueur d'onde du rayonnement infrarouge est de 1688 nm environ.

7. Procédé selon la revendication 1 ou 2, dans lequel la longueur d'onde du rayonnement infrarouge est de 1898 nm environ.

8. Procédé selon la revendication 1 ou 2, dans lequel la longueur d'onde du rayonnement infrarouge est de 1935 nm environ.

9. Procédé selon la revendication 1 ou 2, dans lequel la longueur d'onde du rayonnement infrarouge est de 2084 nm environ.

10. Procédé selon la revendication 1 ou 2, dans lequel la longueur d'onde du rayonnement infrarouge est de 2205 nm environ.

11. Procédé selon l'une des revendications 1 à 10, dans lequel plusieurs rayonnements sont émis à des longueurs d'ondes distinctes ou sur des spectres distincts, compris chacun dans l'une desdites gammes ou ayant l'une desdites valeurs.

12. Procédé selon l'une des revendications 1 à 11, dans lequel le rayonnement électromagnétique est monochromatique ou quasi-monochromatique.

13. Procédé selon la revendication 12, dans laquelle la source de rayonnement électromagnétique est un laser.

14. Application du procédé selon l'une des revendications 1 à 13 à la chauffe des ébauches pour la fabrication de récipients à partir desdites ébauches.

15. Application du procédé selon l'une des revendications 1 à 13 à la chauffe de feuilles ou de plaques pour la fabrication d'objets par thermoformage.

## Patentansprüche

1. Verfahren zur Erhitzung eines Kunststoffs vom Typ Polyethylenterephthalat (PET), Polypropylen (PP), Polymilchsäure (PLA) oder eines Gemischs von PET/2 % Nylon mittels mindestens einer Quelle elektromagnetischer Strahlung, **dadurch gekennzeichnet, dass** die elektromagnetische Strahlung im Infrarotbereich mit einer Wellenlänge oder in einem Wellenlängenspektrum abgegeben wird, die bzw. das in einem der folgenden Bereiche liegt:
■ 1110 - 1160 nm;
■ 1390 - 1450 nm;
■ 1610 - 1650 nm;
■ 1675 - 1700 nm;
■ 1880 - 2100 nm;
■ 2170 - 2230 nm.

2. Verfahren nach Anspruch 1, wobei die Wellenlänge oder das Spektrum der Infrarotstrahlung in einem der folgenden Bereiche liegt:
■ 1110 - 1150 nm;
■ 1400 - 1430 nm;
■ 1627 - 1647 nm;
■ 1680 - 1695 nm;
■ 1890 - 1906 nm;
■ 1920 - 1950 nm;
■ 2074 - 2094 nm;
■ 2188 - 2216 nm.

3. Verfahren nach Anspruch 1 oder 2, wobei die Wellenlänge der Infrarotstrahlung ungefähr 1130 nm ist.

4. Verfahren nach Anspruch 1 oder 2, wobei die Wellenlänge der Infrarotstrahlung ungefähr 1414 nm ist.

5. Verfahren nach Anspruch 1 oder 2, wobei die Wellenlänge der Infrarotstrahlung ungefähr 1637 nm ist.

6. Verfahren nach Anspruch 1 oder 2, wobei die Wellenlänge der Infrarotstrahlung ungefähr 1688 nm ist.

7. Verfahren nach Anspruch 1 oder 2, wobei die Wellenlänge der Infrarotstrahlung ungefähr 1898 nm ist.

8. Verfahren nach Anspruch 1 oder 2, wobei die Wellenlänge der Infrarotstrahlung ungefähr 1935 nm ist.

9. Verfahren nach Anspruch 1 oder 2, wobei die Wellenlänge der Infrarotstrahlung ungefähr 2084 nm ist.

10. Verfahren nach Anspruch 1 oder 2, wobei die Wellenlänge der Infrarotstrahlung ungefähr 2205 nm ist.

11. Verfahren nach einem der Ansprüche 1 bis 10, wobei mehrere Strahlungen mit unterschiedlichen Wellenlängen oder in unterschiedlichen Spektren abgegeben werden, die jeweils in einem der genannten Bereiche liegen oder einen der genannten Werte aufweisen.

12. Verfahren nach einem der Ansprüche 1 bis 11, wobei die elektromagnetische Strahlung monochromatisch oder quasi monochromatisch ist.

13. Verfahren nach Anspruch 12, wobei die Quelle elektromagnetischer Strahlung ein Laser ist.

14. Verwendung des Verfahrens nach einem der Ansprüche 1 bis 13 bei der Erhitzung von Rohlingen zur Herstellung von Behältern aus den Rohlingen.

15. Verwendung des Verfahrens nach einem der Ansprüche 1 bis 13 bei der Erhitzung von Folien oder Platten zur Herstellung von Gegenständen durch Thermoformen.

## Claims

1. Process for heating a plastic of the polyethylene terephthalate (PET), polypropylene (PP), polylactic acid (PLA) or PET/2% nylon mixture type, by means of at least one source of electromagnetic radiation, **characterized in that** the electromagnetic radiation is emitted in the infrared at a wavelength or in a wavelength spectrum contained in one of the following ranges:
• 1110 - 1160 nm;
• 1390 - 1450 nm;
• 1610 - 1650 nm;
• 1675 - 1700 nm;
• 1880 - 2100 nm;
• 2170 - 2230 nm.

2. Process according to Claim 1, in which the wavelength or the spectrum of the infrared radiation is contained in one of the following ranges:
• 1110 - 1150 nm;
• 1400 - 1430 nm;
• 1627 - 1647 nm;
• 1680 - 1695 nm;
• 1890 - 1906 nm;
• 1920 - 1950 nm;
• 2074 - 2094 nm;
• 2188 - 2216 nm.

3. Process according to Claim 1 or 2, in which the wavelength of the infrared radiation is around 1130 nm.

4. Process according to Claim 1 or 2, in which the wavelength of the infrared radiation is around 1414 nm.

5. Process according to Claim 1 or 2, in which the wavelength of the infrared radiation is around 1637 nm.

6. Process according to Claim 1 or 2, in which the wavelength of the infrared radiation is around 1688 nm.

7. Process according to Claim 1 or 2, in which the wavelength of the infrared radiation is around 1898 nm.

8. Process according to Claim 1 or 2, in which the wavelength of the infrared radiation is around 1935 nm.

9. Process according to Claim 1 or 2, in which the wavelength of the infrared radiation is around 2084 nm.

10. Process according to Claim 1 or 2, in which the wavelength of the infrared radiation is around 2205 nm.

11. Process according to one of Claims 1 to 10, in which several radiations are emitted at different wavelengths or over different spectra, each contained in one of said ranges or having one of said values.

12. Process according to one of Claims 1 to 11, in which the electromagnetic radiation is monochromatic or quasi-monochromatic.

13. Process according to Claim 12, in which the source of electromagnetic radiation is a laser.

14. Application of the process according to one of Claims 1 to 13 to heating blanks for manufacturing containers from said blanks.

15. Application of the process according to one of Claims 1 to 13 to heating foils or sheets for manufacturing objects by thermoforming.
